**Europäisches Patentamt**

**European Patent Office**

**Office européen des brevets**

(19)

(11) Veröffentlichungsnummer : **0 396 217 B1**

(12) # EUROPÄISCHE PATENTSCHRIFT

(45) Veröffentlichungstag der Patentschrift :
**28.04.93 Patentblatt 93/17**

(51) Int. Cl.$^5$ : **E04B 1/26**

(21) Anmeldenummer : **90250110.5**

(22) Anmeldetag : **01.05.90**

(54) **Verbindungselement für (Holz-)Balken.**

(30) Priorität : **03.05.89 DE 3914618**

(43) Veröffentlichungstag der Anmeldung :
**07.11.90 Patentblatt 90/45**

(45) Bekanntmachung des Hinweises auf die
Patenterteilung :
**28.04.93 Patentblatt 93/17**

(84) Benannte Vertragsstaaten :
**AT BE CH DK FR GB IT LI NL SE**

(56) Entgegenhaltungen :
**GB-A- 819 601**
**US-A- 4 003 179**
**W. RUSKE: "Holzskelettbau", 1980, Seite 24,**
**Deutsche Verlags-Anstalt, Stuttgart, DE**

(73) Patentinhaber : **BULLDOG Beratungs- und**
**Vertriebs-GmbH**
**Boschstrasse 9**
**W-2808 Syke 1 (DE)**

(72) Erfinder : **Cholid, Yanbo**
**Wachmannstrasse 164**
**W-2800 Bremen 1 (DE)**
Erfinder : **Theordorsen, Trygve**
**Eilinsvej 18**
**N-1342 Jar (NO)**
Erfinder : **Wilhelmi, Jürgen**
**H. Lönsweg 6**
**W-2808 Syke-Wachendorf (DE)**

(74) Vertreter : **Hoormann, Walter, Dr.-Ing. et al**
**FORRESTER & BOEHMERT**
**Franz-Joseph-Strasse 38**
**W-8000 München 40 (DE)**

EP 0 396 217 B1

## Beschreibung

Die Erfindung betrifft eine Verbindungseinrichtung zum stirnseitigen Anschluß eines ersten Balkens an einen quer zu diesem verlaufenden zweiten Balken, eine Stütze od. dgl., wobei der erste Balken einen von seiner anzuschließenden Stirnseite in Längsrichtung verlaufenden, im wesentlichen mittigen, vertikalen Schlitz sowie mehrere quer zu dem Schlitz und dessen Bereich angeordnete Bohrungen aufweist, bestehend aus einem Verbindungselement aus Metall, welches einen sich im montierten Zustand von der Anschlußfläche des zweiten Balkens od. dgl. in Längsrichtung des ersten Balkens in dessen Schlitz erstreckenden Anschlußsteg aufweist, dessen Dimensionierung im wesentlichen den entsprechenden Abmessungen des Schlitzes entspricht, und welches einen Anschlußflansch zur Befestigung am zweiten Balken od. dgl. aufweist, sowie wenigstens einem sich im wesentlichen über die Breite des ersten Balkens erstreckenden, stabförmigen Verbindungsmittel, wie einem Stabdübel od. dgl., das in einer Bohrung des ersten Balkens anzuordnen ist, wobei der Anschlußsteg mit einer zu der Bohrung fluchtenden Aufnahmeöffnung zum Aufnehmen eines stabförmigen Verbindungsmittels versehen ist, und wobei sich von der Aufnahmeöffnung eine Ausnehmung bis zu einem Längsrand des Anschlußsteges erstreckt, deren Breite wenigstens so groß ist wie der in Längsrichtung des ersten Balkens gemessene Querschnitt des stabförmigen Verbindungsmittels.

Zum Verbinden eines ersten Balkens mit einem rechtwinklig zu diesem verlaufenden zweiten Balken (bei dem es sich ebenfalls um einen Träger oder aber um eine i. a. vertikal verlaufende Stütze handeln kann) sind außer zweiteiligen gelenkigen Verbindungselementen, die relativ aufwendig sind, auch einteilige Verbindungselemente bekannt, die in der Praxis auch als T-Blech bezeichnet werden. Bei diesen einteiligen Verbindungselementen handelt es sich an sich um sog. Knotenbleche, die insbesondere (jedoch keineswegs ausschließlich) im Holzbau vielfach eingesetzt werden, um (i. a. aus Holz bestehende) Balken mit Querträgern oder Stützen zu verbinden. Es ist jedoch auch ein Anschluß eines (ersten) Balkens direkt am Baukörper oder einem sonstigen Bauelement möglich. Wenn dem- gemäß vor- oder nachstehend von einem "zweiten Balken" die Rede ist, so beschreibt dieses lediglich den Hauptanwendungsfall, ohne daß die Verwendung der erfindungsgemäßen Verbindungseinrichtung etwa hierauf beschränkt wäre.

Beim Einsatz gattungsgemäßer einteiliger Verbindungselemente entsteht jeweils (anders als bei entsprechenden Gelenkverbindungen in der Art der bekannten Hakenplattenverbindung od. dgl.) eine im wesentlichen biegesteife Verbindung zwischen dem anzuschließenden ersten Balken und dem zweiten Balken bzw. dem Bauwerk selbst. Dieses hat zur Folge, daß aufgrund der regelmäßig gegebenen Toleranzen bei der Montage unerwünschte zusätzliche Beanspruchungen entstehen, die auch nach der Montage erhalten bleiben und sich den aufgrund der planmäßigen Belastungen ergebenden Beanspruchungen überlagern. So kommt es insbesondere im Einbaubereich der i. a. als Stabdübel ausgebildeten stabförmigen Verbindungsmittel häufig zu höchst unerwünschten Beschädigungen, aber auch ggf. an der Stirnseite des ersten Balkens und/oder der Anschlußseite des zweiten Balkens od. dgl. zu übermäßigen Pressungen od. dgl.

Darüber hinaus kommt es bei einer bekannten gattungsgemäßen Verbindungseinrichtung, deren Anschlußsteg mit mehreren dem Durchmesser der einzusetzenden Stabdübel od. dgl. entsprechenden Bohrungen versehen ist, und dessen Anschlußflansch rechtwinklig zu dem Anschlußsteg verläuft, trotz Verwendung von Bohrlehren od. dgl. bei der Montage häufig zu Schwierigkeiten , zumal der anzuschließende erste Balken beim Einsetzen der Stabdübel od. dgl. nicht nur entsprechend justiert, sondern dabei auch zumindest so lange gehalten werden muß, bis der erste Stabdübel eingeschlagen ist.

Aus der GB-A-819 601 ist eine gattungsgemäße Verbindungseinrichtung zum stirnseitigen Verbinden zweier zueinander fluchtender Balken bekannt, bei welcher am geschlitzten Ende des einen (ersten) Balkens eine sich über dessen Breite erstreckende Bohrung vorgesehen ist, in welcher ein Schraubbolzen als stabförmiges Verbindungsmittel angeordnet ist. Der von dem anderen (zweiten) Balken vorstehende Anschlußsteg ist mit einer im montierten Zustand zu der Bohrung im ersten Balken fluchtenden Aufnahmeöffnung zum Aufnehmen des sich durch den ersten Balken erstreckenden Bolzens versehen, wobei sich von der Aufnahmeöffnung eine Ausnehmung bis zum unteren Längsrand des Anschlußsteges erstreckt, deren Breite zunächst so groß ist wie der Durchmesser des Bolzens und sich sodann nach unten hin erweitert, so daß ein Einhängen des zweiten Balkens mit bereits montiertem Verbindungselement möglich ist. Dabei entspricht die Größe der Aufnahmeöffnung im Anschlußsteg dem Durchmesser des sich durch den ersten Balken erstreckenden Bolzens, so daß es bei der Montage zu Zwängen kommen kann, wenn die Aufnahmeöffnung des Anschlußsteges nicht genau zu dem sich durch den ersten Balken erstreckenden Bolzen fluchtet.

Aus der Zeitschrift "Architektur + Wohnwelt" 4/76, S. 294 - 299, insbesondere S. 296 (= Zeitschrift "Holzskelettbau" 1980, S. 24, Deutsche Verlagsanstalt, Stuttgart), ist eine gattungsgemäße Verbindungseinrichtung bekannt, deren im Anschlußsteg angeordnete Aufnahmeöffnungen zur Aufnahme von Stabdübeln als Bohrungen ausgebildet sind, deren (Innen-) Durchmesser dem (Außen-)Durchmesser der Stabdübel im wesentlichen entspricht, so daß es bereits bei der Montage (insbesondere größerer und damit entsprechend schwererer Balken) zu Schwierigkeiten kommt, weil der anzuschließende (erste) Balken bis zum Einschlagen des ersten Stabdübels (zudem noch genau justiert) gehalten werden muß, um nicht nach unten zu rutschen bzw. zu fallen, und danach im montierten Zustand - insbesondere unter Belastung - zu einer "Einspannung des anzuschließenden Endes des ersten Balkens am zweiten Balken od. dgl. mit entsprechenden (Momenten-)Beanspruchungen, die häufig zu erheblichen Beschädigungen führen.

Der vorliegenden Erfindung liegt die Aufgabe zugrunde, eine gattungsgemäße Verbindungseinrichtung zu schaffen, bei welcher es unter Vermeidung von Montagezwängen im wesentlichen lediglich zu Querkraftbeanspruchungen der stabförmigen Verbindungsmittel im Anschlußsteg kommt.

Die Lösung dieser Aufgabe besteht erfindungsgemäß darin, daß der Anschlußsteg mit mehreren jeweils zu einer Bohrung des ersten Balkens fluchtenden Aufnahmeöffnungen versehen ist, wobei der bestand eines Seitenwandabschnittes wenigstens einer ersten Aufnahmeöffnung zu deren stabförmigem Verbindungsmittel im montierten Zustand wenigstens 2 mm beträgt, so daß es im montierten Zustand nicht zur seitlichen Anlage der Stabdübel od. dgl. an Seitenwandabschnitten der ersten Aufnahmeöffnung(en) und damit nicht zu Beanspruchungen kommt, die nicht von der aufgrund der Gewichtsbelastung eingeprägten Querkraftbeaufschlagung herrühren.

Montagemäßig ist die Verlängerung der ersten Aufnahmeöffnung(en) bis zum oberen Rand des Anschlußsteges besonders zweckmäßig, weil sie nicht nur die Möglichkeit eröffnet, den betreffenden Stabdübel od. dgl. bereits außerhalb seiner endgültigen Montageposition in den betreffenden Balken einzuschlagen und diesen erst dann in die Montageposition zu bringen, sondern darüber hinaus auch die Möglichkeit eröffnet, den ersten Balken mit dem bereits eingeschlagenen Stabdübel od. dgl. dann sogleich von oben her in den Aufnahmesteg einzuhängen, was zu einer erheblich einfacheren und demgemäß auch erheblich schnelleren Montage führt, da der anzuschließende erste Balken dabei bereits auf dem Anschlußsteg abzustützen ist, bevor sein Anschlußende die endgültige Montageposition erreicht hat.

Bei der erfindungsgemäßen Ausbildung, bei welcher der (die) Stabdübel od. dgl. lediglich an seiner (ihrer) Unterseite mit der abstützenden Wandung der ersten Aufnahmeöffnung im Eingriff und seitlich frei ist (sind), ist es höchst zweckmäßig, wenn wenigstens eine zweite Aufnahmeöffnung im Anschlußsteg der Verbindungseinrichtung vorhanden ist, die einen Querschnitt aufweist, der dem Querschnitt des der zweiten Aufnahmeöffnung zugeordneten Stabdübels od. dgl. entspricht, wobei eine zweite Aufnahmeöffnung mithin bei einem zylindrischen Stabdübel od. dgl. als Bohrung ausgebildet sein kann, deren Durchmesser dem Stabdübeldurchmesser entspricht, so daß mittels dieses Stabdübels bzw. der mit ihm zusammenwirkenden zweiten Aufnahmeöffnung die konstruktiv vorgesehene Fixierung des ersten Balkens relativ zu dem zweiten Balken od. dgl. gegen Sogkräfte od. dgl. möglich ist.

Dabei kann es in Übereinstimmung mit den neueren einschlägigen Vorschriften ausreichend sein, wenn eine erfindungsgemäße Verbindungseinrichtung lediglich eine erste Aufnahmeöffnung sowie eine zweite Aufnahmeöffnung aufweist. Dennoch können insgesamt selbstverständlich mehr als zwei Aufnahmeöffnungen vorhanden sein, wenn die statischen Umstände dieses erfordern, wobei eine bevorzugte Ausgestaltung darin besteht, daß (wenigstens) zwei erste Aufnahmeöffnungen vorgesehen sind.

Es sei noch darauf verwiesen, daß es im Rahmen einer verschiechterten Ausführungsform unter Verzicht auf die beschriebene Montagevereinfachung (also allein zur Vermeldung von "Einspannungen") ersichtlich auch möglich wäre, die ersten Aufnahmeöffnungen im Anschlußsteg als Durchgangsöffnungen ohne durchgehende Verbindung zum oberen Rand des Anschlußsteges auszubilden, doch würde man hierdurch ohne Not auf erhebliche erfindungsgemäße Vorteile verzichten, so daß eine derartige Ausführungsform kaum zweckmäßig sein dürfte.

Im übrigen sei darauf verwiesen, daß der bevorzugt in an sich bekannter Weise einteilig mit dem Anschlußsteg ausgebildete Anschlußflansch keineswegs notwendigerweise rechtwinklig zum Anschlußsteg verlaufen muß, sondern auch fluchtend zum Anschlußsteg ausgebildet sein kann. Dieses ist insbesondere dann vorteilhaft, wenn sich der Anschlußflansch in den zweiten Balken od.dgl. erstreckt oder durch diesen hindurch und im letzteren Falle an seinem dem Anschlußsteg abgekehrten Ende einen zweiten Anschlußsteg zum Anschluß eines zum zweiten Balken fluchtenden dritten Balkens aufweist, wobei dieser zweite Anschlußsteg dann im wesentlichen spiegelsymmetrisch zum ersten Anschlußsteg angeordnet sein kann.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:

Fig. 1 ein erstes Ausführungsbeispiel einer erfindungsgemäßen Verbindungseinrichtung in Seitenansicht, und zwar auf die linke Seitenfläche des Anschlußsteges gesehen;

Fig. 2 die Verbindungseinrichtung gemäß Fig. 1 (in verkleinerter, perspektivischer Darstellung) - an einem Träger befestigt - zum Anschluß eines darüber angeordneten ersten Balkens vor dessen Montage;

Fig. 3 die Anordnung gemäß Fig. 2 in montierter Stellung;

Fig. 4 ein drittes Ausführungsbeispiel einer erfindungsgemäßen Verbindungseinrichtung in einer Darstellung gemäß Fig. 1;

Fig. 5 eine Verwendung der Verbindungseinrichtung gemäß Fig. 4 bei einem Einsatzfall gemäß den Fig. 2 und 3 in einer Darstellung gemäß Fig. 2;

Fig. 6 die Anordnung gemäß Fig. 5 in einer Darstellung gemäß Fig. 3;

Fig. 7 ein viertes Ausführungsbeispiel einer erfindungsgemäßen Verbindungseinrichtung in einer Darstellung gemäß Fig. 1, wobei diese Verbindungseinrichtung zum Anschluß eines horizontalen Trägers an eine vertikale Stütze bestimmt ist;

Fig. 8 eine Verbindungseinrichtung gemäß Fig. 7 im montierten Zustand an der Stütze, wobei die beidseitig anzuschließenden Träger noch nicht montiert sind; und

Fig. 9 eine Seitenansicht der montierten Anordnung gemäß Fig. 8 in seitlicher Draufsicht auf die beiden angeschlossenen Träger.

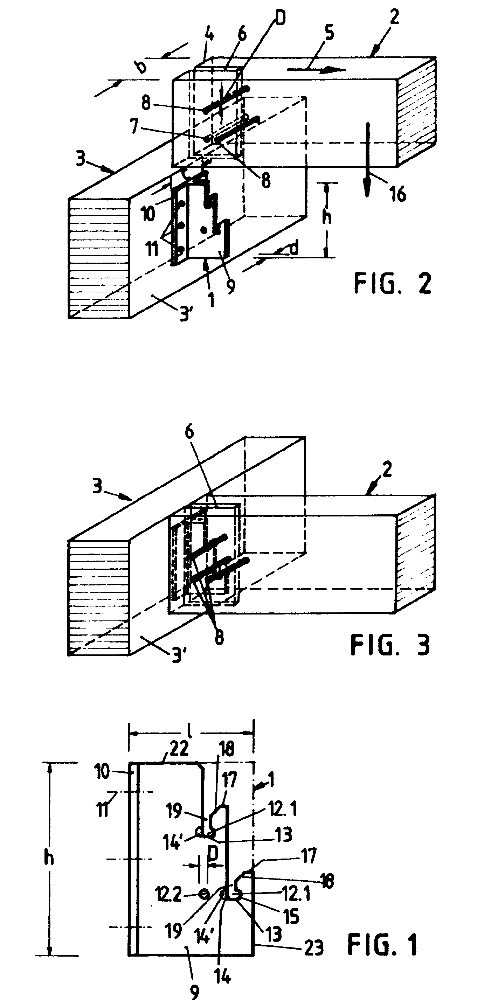

Die Fig. 1 bis 3 zeigen eine im ganzen mit 1 bezeichnete Verbindungseinrichtung aus Metall zum stirnseitigen Anschluß eines horizontal verlaufenden, als Träger eingesetzten ersten (Holz-)Balkens 2 an einen quer (und zwar ebenfalls horizontal) zu diesem verlaufenden zweiten (Holz-)Balken 3, der mithin ebenfalls als Träger eingesetzt wird.

Der an den zweiten Balken 3 anzuschließende Endabschnitt des ersten Balkens 2 ist mit einem von seiner anzuschließenden Stirnseite 4 (s. Fig. 2) in Längsrichtung 5 des ersten Balkens 2 verlaufenden, mittigen vertikalen Schlitz 6 sowie mit drei quer zu dem Schlitz 6 und in dessen Bereich angeordneten Bohrungen 7 versehen, die jeweils zur Aufnahme eines sich im wesentlichen über die Breite b des ersten Balkens 2 erstreckendes stabförmiges Verbindungsmittel in der Art eines Staddübels 8 dienen, wobei zwei dieser Stabdübel 8 bereits vor der Montage im ersten Balken 2 angeordnet sind (s. Fig. 2), während der dritte Stabdübel 8 erst nach der übrigen Montage eingebracht wird (s. Montagezustand gemäß Fig. 3), wie dieses nachfolgend noch im einzelnen erläutert wird:

Die Verbindungseinrichtung 1 weist einen im montierten Zustand (s. Fig. 3) von der Anschlußfläche 3' des zweiten Balkens 3 in Längsrichtung 5 des ersten Balkens 2 vorstehenden Anschlußsteg 9 auf, der integral mit einem rechtwinklig zu ihm verlaufenden, im zweiten Balken 3 zu befestigenden Anschlußflansch 10 verbunden bzw. ausgebildet ist und mit nicht dargestellten Befestigungsmitteln wie insbesondere Nägeln oder Schrauben mit dem zweiten Balken 3 zu verbinden ist. Hierfür weisen die beidseitig des Anschlußsteges 9 frei vorstehenden Schenkel des Anschlußflansches 10 Bohrungen 11 auf, die lediglich in Fig. 2 dargestellt, in Fig. 1 durch ihre Mittellinien 11 angedeutet und im übrigen der besseren Übersicht halber in der Zeichnung fortgelassen worden sind.

Die Dimensionierung des Anschlußsteges 9 entspricht bzgl. seiner Dicke d, seiner größten Höhe h und seiner größten Lange 1 im wesentlichen den entsprechenden Abmessungen des Schlitzes 6, so daß er sich bei Montage in diesen einsetzen läßt, wobei der Anschlußflansch 10 zur Vermeidung eines Spaltes zwischen der Stirnseite 4 des ersten Balkens 2 und der Anschlußfläche 3' des zweiten Balkens 3 in die die Anschlußfläche 3' aufweisende Seite des zweiten Balkens 3 durch entsprechende Ausfräsung od.dgl. eingelassen sein kann, jedoch i.a. auf der Anschlußfläche 3' gemäß Fig. 2 der Zeichnung aufliegt, um den entsprechenden Bearbeitungsaufwand zu verhindern und insbesondere den Querschnitt des zweiten Balkens 3 an der Anschlußstelle nicht zu schwächen. Ist ein völlig verdeckter Anschluß mit einer derartigen Verbindungseinrichtung 1 beabsichtigt, so könnte ersichtlich die Stirnseite 4 des ersten Balkens 2 im Ausmaße der Breite c des Anschlußflansches 10 mit einer entsprechenden Ausfräsung versehen werden, was ersichtlich fertigungstechnisch erheblich einfacher ist und festigkeitsmäßig erheblich weniger bedeutsam.

Zur eigentlichen Aufnahme des ersten Balkens 2 am zweiten Balken 3 ist der Anschlußsteg 9 der Verbindungseinrichtung 1 - entsprechend der Anzahl der Bohrungen 7 im ersten Balken 2 - mit drei Aufnahmeöffnungen 12 zum jeweiligen Aufnehmen eines Stabdübels 8 versehen, die nachfolgend insbesondere anhand von Fig. 1 im einzelnen beschrieben werden:

Wie aus Fig. 1 erkennbar ist, weist der Anschlußsteg 9 der Verbindungseinrichtung 1 zwei erste Aufnahmeöffnungen 12.1 sowie eine zweite Aufnahmeöffnung 12.2 auf, die jeweils mit gegenseitigem Abstand angeordnet sind. Es ist erkennbar, daß die ersten Aufnahmeöffnungen 12.1 jeweils in Längsrichtung 5 des ersten Balkens 2 größer dimensioniert sind als der sich in Längsrichtung 5 des ersten Balkens 2 erstreckende Querschnitt - im vorliegenden falle also der Durchmesser D - eines jeweils in einer ersten Aufnahmeöffnung 12.1 anzuordnenden Stabdübels 8, während die zweite Aufnahmeöffnung 12.2 einen Durchmesser aufweist, der dem Durchmesser des in der zweiten Aufnahmeöffnung 12.2 anzuordnenden Stabdübels 8 entspricht.

Dabei sind die ersten Aufnahmeöffnungen 12.1 so bemessen, daß der jeweils von ihnen aufgenommene Stabdübel 8 im montierten Zustand lediglich an seiner Unterseite auf der ihn abstützenden unteren Seitenwandung 13 der betreffenden ersten Aufnahmeöffnung 12.1 aufliegt (und außerdem lediglich mit seinem zur anzuschließenden Stirnseite 4 des ersten Balkens 2 gerichteten Abschnitt an der in Fig. 1 links liegenden Seitenwand 14 der ersten Aufnahmeöffnung 12.1 anliegt, während die gegenüberliegende rechte Seitenwand 15 der ersten Aufnahmeöffnungen 12.1 jeweils nicht mit dem Stabdübel 8 in Kontakt ist), so daß auch im belasteten Montagezustand dort keine Zwänge mit entsprechenden Beanspruchungen auftreten können und die entsprechenden Stabdübel 8 mithin im wesentlichen lediglich Querkräfte aufnehmen können.

Um dieses sicherzustellen, kann der dem Stabdübel 8 im montierten Zustand jeweils zugeordnete linke Seitenwandabschnitt 14 ebenfalls (wie der gegenüberliegende rechte Seitenwandabschnitt 15) ausgenommen sein, wie dieses in Fig. 1 mit gepunkteten Linien dargestellt und mit 14' bezeichnet ist. Bei einer derartigen Ausbildung liegt der Stabdübel 8 mithin im montierten Zustand allein an seiner Unterseite auf der unteren Seitenwand 13 der jeweiligen ersten Aufnahmeöffnung 12.1 auf und ist in Längsrichtung 5 beiderseits frei, so daß er mit Sicherheit sowohl bei der Montage als auch unter späterer voller Belastung lediglich Querkräfte aufnehmen kann.

Eine Sicherung des ersten Balkens 2 gegen nach oben gerichtete (ggf. durch Sog erzeugte) Zugkräfte sowie eine relative Zuordnung des ersten Balkens 2 zum zweiten Balken 3 bzw. die Fixierung oder genaue Positionierung des ersten Balkens 2 erfolgt mittels der zweiten Aufnahmeöffnung 12.2 und des in dieser anzuordnenden Stabdübels 8 bei/nach bereits im wesentlichen erfolgter Montage, die wie folgt durchgeführt wird:

Nachdem die Verbindungseinrichtung 1 in der aus Fig. 2 erkennbaren Weise am zweiten Balken 3 befestigt ist, wird der anzuschließende erste Balken 2 gemäß Fig. 2 in Richtung des Pfeiles 16 von oben her eingehängt, wobei der obere Stabdübel 8 und der rechte Stabdübel 8 bereits eingetrieben sind, so daß der erste Balken 2 bei der Montage sogleich auf dem Anschlußsteg 9 der Verbindungseinrichtung 1 abgestützt werden kann, ohne ihn dabei halten bzw. abstützen zu müssen, wie dieses bei bekannten gattungsgemäßen Verbindungseinrichtungen der Fall ist, wodurch die Montage ersichtlich ganz erheblich vereinfacht wird. Dabei können die beiden vorgenannten Stabdübel 8, 8 jeweils zunächst auf einer horizontalen Stützfläche 17 des Anschlußsteges 9 abgestützt werden und sodann jeweils über eine Rampe 18 in eine schlitzförmige Ausnehmung 19 gleiten, deren Breite dem Durchmesser D eines Stabdübels 8 entspricht, wobei die Ausnehmungen 19 bei der Montage jeweils als Führung dienen, um den betreffenden Stabdübel 8 in die ihm zugeordnete Aufnahmeöffnung 12.1 zu bringen.

Nach der Endpositionierung und nachdem der dritte Stabdübel 8 eingeschlagen worden ist, ergibt sich letztlich der Montageendzustand gemäß Fig. 3.

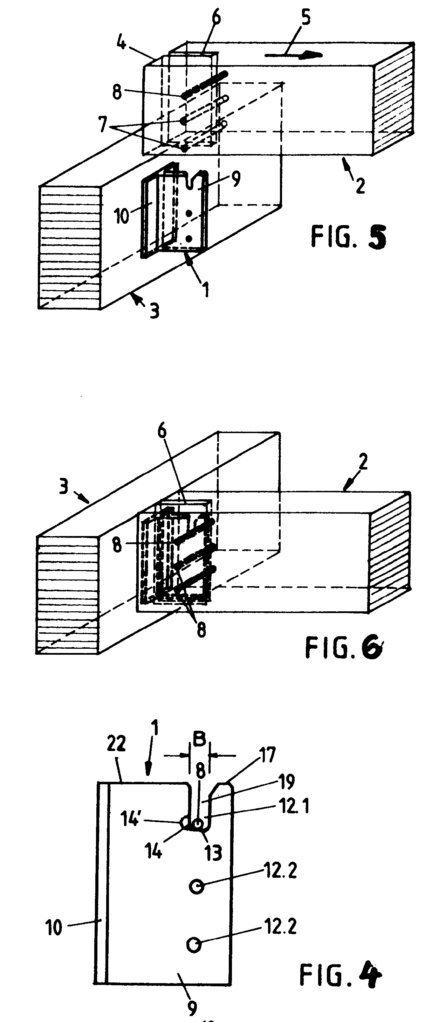

Die Fig. 4 bis 6 zeigen eine weitere Variante. Auch bei dieser Ausgestaltung weist die Verbindungseinrichtung 1 zwei zweite Aufnahmeöffnungen 12.2 und lediglich eine erste Aufnahmeöffnung 12.1 auf, obwohl ersichtlich auch hier eine der beiden zweiten Aufnahmeöffnungen 12.2 durch eine erste Aufnahmeöffnung 12.1 ersetzt werden könnte.

Es ergibt sich auch hier der erhebliche Montagevorteil, daß der eine (oberste) Stabdübel 8 bereits vor Montage des ersten Balkens 2 in den ersten Balken 2 eingetrieben werden kann, so daß sich bei der Montage insoweit die gleichen Vorteile ergeben wie bei dem Verbindungselement 1 gemäß den Fig. 1 bis 3 und nach Montage unter Belastung bzgl. des in der (den) ersten Aufnahmeöffung(en) 12.1 angeordneten Stabdübel(s) die Vorteile, wie sie oben bzgl. erster Aufnahmeöffnungen 12.1 bereits ausführlich beschrieben worden sind, und zwar insbesondere dann, wenn auch hier die linke Seitenwand 14 der ersten Aufnahmeöffnung 12.1 in Richtung auf den Anschlußflansch 10 ausgenommen ist, so daß der in Fig. 4 im montierten Zustand angedeutete Stabdübel 8 lediglich mit der unteren Seltenwand 13 der ersten Aufnahmeöffnung 12.1 im Eingriff ist.

Im übrigen sei darauf verwiesen, daß zur Erzielung möglichst geringer Fertigungskosten die oberhalb der eigentlichen ersten Aufnahmeöffnung 12.1 liegende Ausnehmung 19 genauso breit ausgebildet ist wie die in Längsrichtung 5 des ersten Balkens 2 verlaufende Länge der ersten Aufnahmeöffnung 12.1, so daß keine Hinterschneidung vorhanden ist, wobei die Breite B der Ausnehmung 19 bei diesem Ausführungsbeispiel etwa 2 mm größer ist als der Durchmesser D des Stabdübels 8. Werden indes die Anschlußflansche 9 nicht gefräst, sondern gestanzt, was bei Serienfertigung rentabel ist, so kann die erfindungsgemäß vorgesehene Erweiterung der ersten Aufnahmeöffnung 12 .1 nach rechts (also in Richtung des Pfeiles 5) selbstverständlich auch ohne beachtliche Mehrkosten als Hinterschneidung ausgebildet werden, wie dieses bei der Ausgestaltung gemäß den Fig. 1 bis 3 der Fall ist.

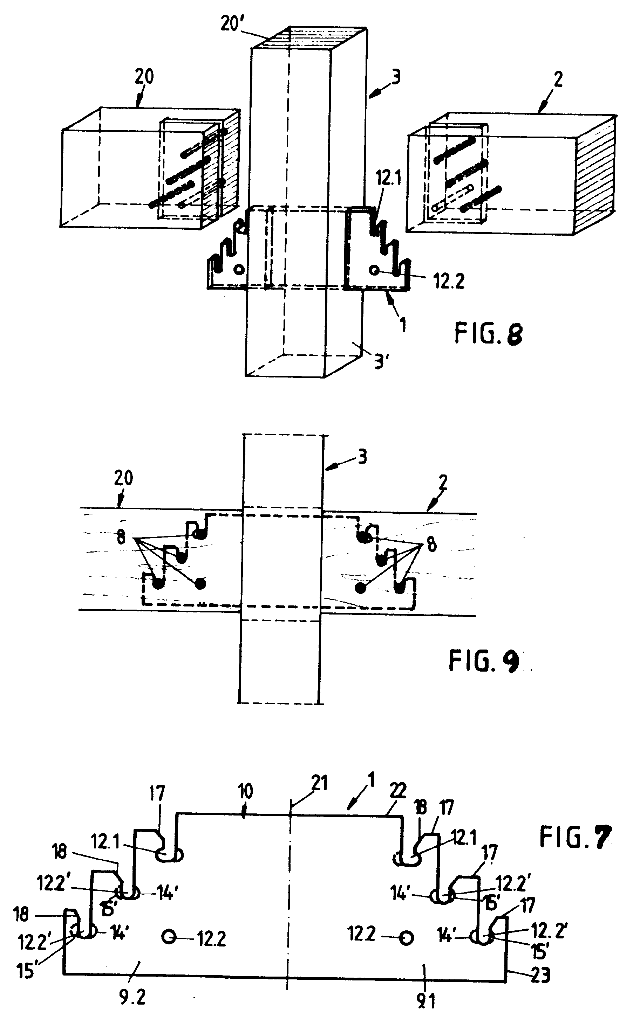

Die Fig. 7 bis 8 zeigen eine weitere Variante eines Verbindungselementes 1, mit dem ein als Träger fungierender erster Balken 2 an einem als vertikale Stütze anzuordnenden bzw. angeordneten zweiten Balken 3 und darüber hinaus noch ein fluchtend zum ersten Balken 2 verlaufender dritter Balken 20 an der der Anschlußfläche 3' gegenüberliegenden Anschlußfläche der Stütze 3 anzuschließen ist.

Wie den Fig. 7 bis 9 zu entnehmen ist, ist die Verbindungseinrichtung 1 spiegelsymmetrisch zu seiner parallel zum zweiten Balken 3 verlaufenden Mittellinie 21 ausgebildet, wobei nicht nur die beiden Anschlußstege 9.1 und 9.2 zueinander fluchten, sondern auch der zwischen ihnen liegende, gemeinsame Anschlußflansch 10, der im montierten Zustand in einem Durchgangsschlitz des zweiten Balkens 3 angeordnet ist.

Es ist erkennbar, daß beide Anschlußstege 9.1 und 9.2 bei der in Fig. 7 in ausgezogenen Linien dargestellten Ausführungsform jeweils eine erste Aufnahmeöffnung 12.1 aufweisen und jeweils drei zweite Aufnahmeöffnungen 12.2, die jedoch ersichtlich unterschiedlich ausgebildet sind. Während nämlich jeweils die im inneren, annähernd mittleren Bereich angeordnete zweite Aufnahmeöffnung 12.2 - ebenso wie die zweiten Aufnahmeöffnungen 12.2 der Ausgestaltungen gemäß den Fig. 1 bis 6 - als Bohrungen ausgebildet sind, sind die in Fig. 7 mit 12.2' bezeichneten zweiten Aufnahmeöffnungen bei Bedarf ohne weiteres in erste Aufnahmeöffnungen 12.1 veränderbar, indem sie ein- oder beidseitig durch in Fig. 7 gepunktet dargestellte Hinterschneidungen 15' oder/und 14' seitlich erweitert werden, so daß die in ihnen angeordneten Stabdübel 8 dann - ebenso wie die in den beiden ersten Aufnahmeöffnungen 12.1 anzuordnenden Stabdübel 8 - lediglich Querkräfte aufnehmen können, wobei die relative Positionierung bzw. Fixierung des ersten Balkens 2 bzw. des dritten Balkens 20 am zweiten Balken 3 dann bei der Montage letztlich wiederum durch die zweite Aufnahmeöffnung 12.2 bzw. den in diese einzutreibenden Stabdübel 8 (allein) erfolgt.

Es sei noch darauf verwiesen, daß es insbesondere bei Raumfachwerken zweckmäßig sei kann, die Verbindungseinrichtung mit zwei (parallelen) Anschlußstegen 9, 9 zu versehen, die dann i.d.R. identisch ausgebildet sind.

EP 0 396 217 B1

| 1 | Verbindungselement | | 1 |
|---|---|---|---|
| 2 | erster Balken | | 2 |
| 3 | zweiter Balken | 3' Anschlußfläche (von 2) | 3 |
| 4 | Stirnseite (von 2) | | 4 |
| 5 | Pfeil (Längsrichtung von 2) | | 5 |
| 6 | Schlitz (in 2) | | 6 |
| 7 | Bohrungen (in 2; für 8) | | 7 |
| 8 | Stabdübel | | 8 |
| 9 | Anschlußsteg (von 1) | | 9 |
| 10 | Anschlußflansch (von 1) | | 10 |
| 11 | Bohrungen (in 10) | | 11 |
| 12 | Aufnahmeöffnungen | 12.1 erste Aufnahmeöffnungen 12.2 zweite Aufnahmeöffnungen | 12 |
| 13 | untere Seitenwand (von 12.1) | | 13 |
| 14, 14' | linke Seitenwand (von 12.1) | | 14 |
| 15 | rechte Seitenwand (von 12.1) | | 15 |
| 16 | Pfeil (Montagerichtung von 2) | | 16 |
| 17 | Stützfläche | | 17 |
| 18 | Rampe | | 18 |
| 19 | Ausnehmung | | 19 |
| 20 | dritter Balken | | 20 |
| 21 | Mittellinie | | 21 |
| 22 | oberer Rand (von 9) | | 22 |
| 23 | freier Rand (von 9) | | 23 |
| 24 | | | 24 |
| 25 | | | 25 |
| 26 | | | 26 |
| 27 | | | 27 |
| 28 | | | 28 |
| 29 | | | 29 |
| 30 | | | 30 |

## Patentansprüche

1. Verbindungseinrichtung zum stirnseitigen Anschluß eines ersten Balkens (2) an einen quer zu diesem verlaufenden zweiten Balken (3), eine Stütze od. dgl., wobei der erste Balken (2) einen von seiner anzuschließenden Stirnseite (4) in Längsrichtung (5) verlaufenden, im wesentlichen mittigen, vertikalen Schlitz (6) sowie mehrere quer zu dem Schlitz (6) und in dessen Bereich angeordnete Bohrungen (7) aufweist, bestehend aus

a) einem Verbindungselement (1) aus Metall, welches einen sich im montierten Zustand von der Anschlußfläche (3') des zweiten Balkens (3) od. dgl. in Längsrichtung (5) des ersten Balkens (2) in dessen Schlitz (6) erstreckenden Anschlußsteg (9) aufweist, dessen Dimensionierung im wesentlichen den entsprechenden Abmessungen des Schlitzes (6) entspricht, und welches einen Anschlußflansch (10) zur Befestigung am zweiten Balken (3) od. dgl. aufweist,
sowie

b) wenigstens einem sich im wesentlichen über die Breite des ersten Balkens (2) erstreckenden, stabförmigen Verbindungsmittel (8) wie einem Stabdübel od. dgl., das in einer Bohrung (7) des ersten Balkens anzuordnen ist, wobei der Anschlußsteg (9) mit einer zu der Bohrung (7) fluchtenden Aufnahmeöffnung (12.1) zum Aufnehmen des stabförmigen Verbindungsmittels (8) versehen ist, und wobei sich von der Aufnahmeöffnung (12.1) eine Ausnehmung (19) bis zu einem Längsrand (22) des Anschlußsteges (9) erstreckt, deren Breite wenigstens so groß ist wie der in Längsrichtung (5) des ersten Balkens (2) gemessene Querschnitt des stabförmigen Verbindungsmittels (8),

dadurch gekennzeichnet, daß der Anschlußsteg (9) mit mehreren jeweils zu einer Bohrung (7) des ersten Balkens (2) fluchtenden Aufnahmeöffnungen (12.1, 12.2) zur Aufnahme jeweils eines stabförmigen Verbindungsmittels versehen ist, wobei der Abstand eines Seitenwandabschnittes (15 oder/und 14') wenigstens einer ersten Aufnahmeöffnung (12.1) zu deren stabförmigem Verbindungsmittel (8) im montierten Zustand wenigstens 2 mm beträgt.

2. Verbindungseinrichtung nach Anspruch 1, dadurch gekennzeichnet, daß wenigstens zwei erste Aufnahmeöffnungen (12.1) vorhanden sind.

3. Verbindungseinrichtung nach Anspruch 1 oder 2, dadurch gekennzeichnet, daß wenigstens eine zweite Aufnahmeöffnung (12.2) vorgesehen ist, die einen Querschnitt aufweist, der dem Querschnitt des der zweiten Aufnahmeöffnung (12.2) zugeordneten stabförmigen Verbindungsmittels (8) entspricht.

4. Verbindungseinrichtung nach einem der Ansprüche 1 bis 3, dadurch gekennzeichnet, daß sich der Anschlußflansch (10) rechtwinklig zum Anschlußsteg (9) erstreckt.

5. Verbindungseinrichtung nach einem der Ansprüche 1 bis 3, dadurch gekennzeichnet, daß der Anschlußflansch (10) zum Anschlußsteg (9) fluchtet.

6. Verbindungseinrichtung nach Anspruch 5, dadurch gekennzeichnet, daß sich der Anschlußflansch (10) durch den zweiten Balken (3) od.dgl. hindurcherstreckt und an seinem dem (ersten) Anschlußsteg (9.1) abgekehrten Ende einen spiegelsymmetrisch zum ersten Anschlußsteg (9.1) angeordneten zweiten Anschlußsteg (9.2) zum Anschluß eines zum ersten Balken (2) fluchtenden dritten Balkens (20) aufweist.

## Claims

1. A device for connecting the end of a first beam (2) to a second beam (3) or post or the like extending transversely thereto, the first beam (2) having a substantially central vertical slot (6) extending in the longitudinal direction (5) from the end face (4) to be connected, and a number of bores (7) situated near and transversely of the slot, the device comprising

(a) a metal connecting element (1) which, when assembled, has a web (9) extending from the surface (3') for connection of the second beam (3) or the like into the slot (6) in the longitudinal direction (5) of the first beam (2), the dimensions of the web substantially corresponding to the corresponding dimensions of the slot (6), and the web having a flange (10) for securing to the second beam (3) or the like, and

(b) at least one rod-like connecting means (8) such as a peg or the like, extending substantially across the width of the first beam (2) and for disposing in a bore (7) in the first beam, the web (9) being formed with an opening (12.1) in line with the bore (7) to receive the connecting means (8), and a recess (19) extending from the opening (12.1) to a longitudinal edge (22) of the web (9), the width of the opening being at least as great as the cross-section of the connecting means (8), measured in the longitudinal direction (5) of the first beam (2),

characterised in that the web (9) has a number of openings (12.1, 12.2) for receiving respective rod-like connecting means, each opening being in line with a bore (7) in the first beam (2), the distance between a side wall portion (15 and/or 14') of at least one first opening (12.1) and the associated connecting means (8) in the assembled state being at least 2 mm.

2. A connecting device according to claim 1, characterised in that at least two first openings (12.1) are provided.

3. A connecting device according to claim 1 or 2, characterised in that at least one second opening (12.2) is provided and has a cross-section corresponding to the cross-section of the connecting means (8) associated with the second opening (12.2).

4. A connecting device according to any of claims 1 to 3, characterised in that the flange (10) extends at right angles to the web (9).

5. A connecting device according to any of claims 1 to 3, characterised in that the flange (10) is in line with the web (9).

6. A connecting device according to claim 5, characterised in that the flange (10) extends through the second beam (3) or the like and, at its end remote from the (first) web (9.1), has a second web (9.2) disposed with mirror symmetry relative to the first web (9.1) for connecting a third beam (20) in line with the first beam (2).

**Revendications**

1. Dispositif d'assemblage pour l'assemblage en bout d'une première poutre (2) sur une deuxième poutre (3) s'étendant perpendiculairement à la première, sur un appui ou similaire, la première poutre (2) présentant une fente verticale (6) sensiblement médiane s'étendant en direction longitudinale (5) à partir de sa face de bout à raccorder (4), ainsi que plusieurs forages (7) disposés perpendiculairement à la fente (6) et dans son domaine,
       constitué
a) d'un élément d'assemblage métallique (1) qui comporte une âme d'assemblage (9) s'étendant, à l'état monté, à partir de la face d'assemblage (3') de la deuxième poutre (3) ou similaire, dans la direction longitudinale (5) de la première poutre (2) à l'intérieur de la fente (6) de celle-ci, les dimensions de cette âme correspondant sensiblement aux dimensions respectives de la fente (6), cet élément comportant une bride d'assemblage (10) se fixant sur la deuxième poutre (3) ou similaire,
b) d'au moins un moyen d'assemblage (8) en forme de barre s'étendant sensiblement sur la largeur de la première poutre (2), moyen tel que cheville ou similaire, devant être disposé dans un forage (7) de la première poutre, l'âme d'assemblage (9) étant munie d'une ouverture de réception (12.1) destinée à recevoir le moyen d'assemblage (8) en forme de barre, un évidement (19) s'étendant jusqu'à un bord longitudinal (22) de l'âme d'assemblage (9) à partir de l'ouverture de réception (12.1), la largeur de cet évidement étant au moins aussi grande que la cote de la section du moyen d'assemblage (8) en forme de barre mesurée dans la direction longitudinale (5) de la première poutre (2),
       <u>caractérisé en ce</u> que l'âme d'assemblage (9) est munie de plusieurs ouvertures de réception (12.1, 12.2), chacune d'elles étant prévue pour recevoir un moyen d'assemblage en forme de barre et coïncidant avec un forage (7) de la première poutre (2), la distance d'une partie de paroi latérale (15 ou/et 14') d'au moins une première ouverture de réception (12.1) à son moyen d'assemblage (8) en forme de barre étant au moins égale à 2 mm à l'état monté.

2. Dispositif d'assemblage selon la revendication 1, caractérisé en ce qu'il présente au moins deux premières ouvertures de réception (12.1).

3. Dispositif d'assemblage selon la revendication 1 ou la revendication 2, caractérisé en ce qu'il est prévu au moins une deuxième ouverture de réception (12.2) présentant une section équivalente à la section du moyen d'assemblage (8) en forme de barre associé à cette deuxième ouverture de réception (12.2).

4. Dispositif d'assemblage selon l'une des revendications 1 à 3, caractérisé en ce que la bride d'assemblage (10) s'étend à angle droit par rapport à l'âme d'assemblage (9).

5. Dispositif d'assemblage selon l'une des revendications 1 à 3, caractérisé en ce que la bride d'assemblage (10) est alignée avec l'âme d'assemblage (9).

6. Dispositif d'assemblage selon la revendication 5, caractérisé en ce que la bride d'assemblage (10) s'étend à travers la deuxième poutre (3) ou similaire et comporte, à son extrémité située à l'opposé de la (première) âme d'assemblage (9.1), une deuxième âme d'assemblage (9.2) disposée symétriquement à la première âme d'assemblage (9.1) par rapport à un plan et destinée à l'assemblage d'une troisième poutre (20) située en face de la première poutre (2).

FIG. 2

FIG. 3

FIG. 1

FIG. 5

FIG. 6

FIG. 4

FIG. 8

FIG. 9

FIG. 7